# EUROPÄISCHE PATENTSCHRIFT

(11) **EP 3 385 243 B1**
(45) Veröffentlichungstag und Bekanntmachung des Hinweises auf die Patenterteilung: **06.10.2021**
(21) Anmeldenummer: 18165388.2
(22) Anmeldetag: 03.04.2018
(51) Int. Cl.: B01F 13/10, C04B 28/18

(54) **VERFAHREN UND VORRICHTUNG ZUR HERSTELLUNG VON PORÖSEM MINERALISCHEN BAUMATERIAL**
METHOD AND DEVICE FOR THE PREPARATION OF POROUS MINERAL CONSTRUCTION MATERIAL
PROCÉDÉ ET DISPOSITIF DE FABRICATION DE MATÉRIAU DE CONSTRUCTION MINÉRAL POREUX

(30) Priorität: 05.04.2017 DE 102017205822
(43) Veröffentlichungstag der Anmeldung: 10.10.2018
(73) Patentinhaber: Baustoffwerke Löbnitz GmbH & Co. KG, 04509 Löbnitz (DE)
(72) Erfinder: DROLL, Enrico, 06925 Annaburg (DE); NICKEL, Reiko, 14943 Luckenwalde (DE); WOLFF, Guido, 48147 Münster (DE)
(74) Vertreter: Weickmann & Weickmann PartmbB

(56) Entgegenhaltungen:
- EP-A1- 0 038 552
- EP-A1- 0 151 452
- EP-A1- 0 628 523
- EP-A1- 0 994 086
- EP-A1- 3 241 813
- EP-A2- 0 673 733
- WO-A2-2008/052753
- DE-A1-102010 062 762

## Beschreibung

Die Erfindung betrifft ein Verfahren zur Herstellung von porösem mineralischen Baumaterial und eine dafür geeignete Vorrichtung.

Poröse mineralische Materialien unterschiedlichster Art sind als Baustoffe bekannt. Aufgrund ihrer hohen Porosität zeichnen sie sich im Vergleich zu Beton durch eine deutlich geringere Rohdichte aus. Unter der Rohdichte versteht man die Dichte eines porösen Körpers basierend auf dem Volumen einschließlich der Porenräume. Während die Rohdichte bei Normalbeton zwischen etwa 2.000 und 2.600 kg/m³ liegt, werden mit porösen mineralischen Baustoffen üblicherweise Rohdichten im Bereich von 80 bis 600 kg/m³ erreicht. Durch den hohen Luftanteil ergeben sich verbesserte Wärmedämmeigenschaften. Ausschlaggebend ist die Wärmeleitfähigkeit, die mit dem Wärmeleitwert Lambda angegeben wird. Je kleiner der Wert, desto besser ist das Dämmvermögen.

Abhängig von der Art der Herstellung unterteilt man poröse mineralische Materialien in Porenbeton und Schaumbeton. Porenbeton wird üblicherweise durch Vermischen der Ausgangsstoffe Brandkalk, Zement, Quarzsand und Wasser mit einem Porenbildner wie Aluminiumpulver oder Aluminiumpaste hergestellt. Das metallische Aluminium entwickelt in der alkalischen Suspension Wasserstoffgas, so dass viele kleine Gasblasen entstehen, welche die allmählich ansteifende Mischung aufschäumen. Nach einem Dampfhärteprozess in einem Autoklaven besteht das fertige Produkt aus einer kristallinen Phase von Calziumsilikathydrat, welche großteils dem natürlichen Mineral Tobermorit entspricht. Bei der Herstellung von Schaumbeton werden anstelle von Aluminium Schaumbildner beispielsweise auf Basis von Tensiden oder Proteinen eingesetzt. Üblicherweise wird ein vorerzeugter Schaum in Beton eingemischt und das Rohprodukt anschließend dampfgehärtet. Für eine gute Produktqualität ist es dabei entscheidend, den Schaum möglichst gleichmäßig im Beton zu verteilen, ohne dabei die Luftblasen im Schaum zu zerstören. Eine gute Wärmedämmung kann erreicht werden, wenn eine Vielzahl kleiner Poren möglichst gleichmäßig im Feststoff verteilt ist. Zudem sollte der Feststoff eine möglichst regelmäßige kristalline Zusammensetzung aufweisen. Bisher bekannte Verfahren zur Herstellung von Schaumbeton können dies häufig nicht ausreichend gewährleisten. EP0038552 offenbart ein Verfahren zur Herstellung eines porösen mineralischen Baumaterials auf Calziumsilikathydrat-Basis. EP3241813 zeigt ein Verfahren zur Herstellung eines Dämmmaterials.

Der Erfindung lag daher die Aufgabe zugrunde, ein Verfahren bereitzustellen, mit dem es gelingt, ein besonders gleichmäßiges poröses mineralisches Baumaterial bereitzustellen, welches sich durch einen geringen Wärmeleitwert und eine hohe mechanische Festigkeit auszeichnet. Bei dem porösen mineralischen Baumaterial handelt es sich im Sinne der vorliegenden Anmeldung um ein Material auf Calziumsilikathydrat-Basis. Genauer gesagt beschäftigt sich die Erfindung mit der Herstellung eines verbesserten Schaumbetons, wobei unter dem Begriff "Schaumbeton" ein hydrothermal gehärtetes, poröses mineralisches Material verstanden wird, zu dessen Herstellung zumindest Wasser, SiO₂, Kalkhydrat, Zement und Schaumbildner, vorzugsweise auf Tensid- oder Proteinbasis eingesetzt werden.

In der vorliegenden Erfindung wurde überraschend gefunden, dass es für die Herstellung von Schaumbeton nicht erforderlich ist, separat einen Schaum herzustellen und diesen in ein mineralisches Baustoffgemisch einzumischen, sondern dass es prinzipiell möglich ist, einen Schaumbildner z. B. auf Tensid- oder Proteinbasis direkt in einem wässrigen Baustoffgemisch aufzuschäumen. Wird das aufgeschäumte Gemisch anschließend einem mechanischen Mischschritt unterzogen, so kann ein mineralischer Baustoff mit besonders homogener Struktur und gleichmäßig verteilten feinen Poren erhalten werden.

Ein erster Aspekt der Erfindung betrifft daher ein Verfahren zur Herstellung eines porösen mineralischen Baumaterials auf Calziumsilikathydrat-Basis umfassend die Schritte:
(i) Bereitstellen eines wässrigen Gemischs, welches Wasser, SiO₂, Kalkhydrat, Zement und einen Erhärtungsbeschleuniger umfasst,
(ii) Einbringen wenigstens eines Schaumbildners, z. B. Tensids oder Proteins, in das wässrige Gemisch aus Schritt (i),
(iii) Aufschäumen des Gemischs aus Schritt (ii) unter Zufuhr eines Gases, insbesondere Luft, in einem Oszillationsmischer, um ein aufgeschäumtes Gemisch zu erhalten,
(iv) Überführen des aufgeschäumten Gemischs aus Schritt (iii) zu einem weiteren Mischer, vorzugsweise Horizontalmischer, und Vermischen mit geringer Drehzahl vorzugsweise im Bereich von 20-200 UpM, um eine Rohmischung zu erhalten,
(v) Belassen der Rohmischung aus Schritt (iv) in einer Form für mindestens 5h, vorzugsweise für mindestens 10 h und besonders bevorzugt mindestens 15 h in der Form, um ein Rohmaterial zu erhalten,
(vi) Dampfhärten des in Schritt (v) erhalten Rohmaterials in einem Autoklaven, dies ggf. nach Zuschneiden in Teile und
(vii) Trocknen des dampfgehärteten Rohmaterials.

In Schritt (i) wird ein wässriges Gemisch der Ausgangsmaterialien hergestellt. Dabei werden SiO₂ bzw. ein silikathaltiges Material, Kalkhydrat (gelöschter Kalk), Zement und ein Erhärtungsbeschleuniger mit Wasser vermischt. Darüber hinaus können weitere optionale Ausgangsmaterialien, wie z. B. Kaolin, Meta-Kaolin, Rückgut, Hydrophobierungsmittel, Steinkohle, Flugasche, Gips, Anhydrit und weitere im Fachbereich übliche Betonzusatzstoffe und Gemische davon zugegeben werden. Weitere Beispiele für geeignete Zusatzstoffe sind ultrahochfester Beton (UHPC), Tonerde (Aluminium-III-Oxide), Kalkerden und Kieselerden.

Um die Eigenschaften des erfindungsgemäß hergestellten Schaumbetons weiter zu optimieren, können Zusatzstoffe wie Zeolithe, Aerogel, Perlite oder Glaskugeln verwendet werden. Diese Zusatzstoffe können entweder bereits in das wässrige Gemisch der Ausgangsmaterialien von Schritt (i) oder zu einem späteren Zeitpunkt des Verfahrens zugegeben werden. Aerogel ist ein hochporöser Festkörper vorzugsweise auf Silikat-Basis, der dem erfindungsgemäßen Schaumbeton eine noch weiter verringerte Wärmeleitfähigkeit verleihen kann. Perlite werden insbesondere in Form von Blähperlit zugegeben. Diese verringern ebenfalls die Wärmeleitfähigkeit des Schaumbetons. Glaskugeln wie z. B. 3M Glass Bubbles sind Glaskügelchen mit einem Durchmesser von üblicherweise 1 bis 1.000 µm. Diese fungieren als leichtgewichtiger Füllstoff, der aufgrund seiner geringen Wärmeleitfähigkeit in der Lage ist, dem erfindungsgemäß hergestellten Schaumbeton eine besonders gute wärmedämmende Wirkung zu verleihen. Wenn diese oder ähnliche Zusatzstoffe eingesetzt werden, können sie zu einem beliebigen Zeitpunkt während der Herstellung zugegeben werden, sofern sichergestellt werden kann, dass sich die Zusatzstoffe gleichmäßig in dem Material verteilen.

Die Bezeichnung "SiO₂" wird im Sinne der Erfindung zusammenfassend für beliebige silikathaltige Materialien verwendet. Als silikathaltiges Material eignen sich Quarzsand bzw. quarzhaltiger Sand oder quarzhaltiges Gesteinsmehl. Bezogen auf den Gesamtfeststoffgehalt des wässrigen Gemischs von Schritt (i) beträgt der Anteil an SiO₂ etwa 25 bis 35 Gew.-%, vorzugsweise etwa 27 bis 32 Gew.-%.

Die Begriffe Kalkhydrat und gelöschter Kalk werden hierin austauschbar verwendet und bezeichnen Calciumhydroxid. Bezogen auf den Gesamtfeststoffgehalt des wässrigen Gemischs von Schritt (i) wird Kalkhydrat in einer Menge von etwa 18 bis 35 Gew.-%, vorzugsweise etwa 25 bis 32 Gew.-% verwendet.

Zement besteht chemisch gesehen aus etwa 58 bis 76 % Calziumoxid (CaO), 18 bis 26 % Siliziumdioxid (SiO₂), 4 bis 10 % Aluminiumoxid (Al₂O₃) und 2 bis 5 % Eisenoxid (Fe₂O₃). Diese Hauptbestandteile liegen im Zement vorrangig in Form von Tricalciumsilikat (3CaO*SiO₂), Dicalciumsilikat (2CaO*SiO₂), Tricalciumaluminat (3CaO*Al₂O₃) und Tetracalciumaluminatferrit (4CaO*Al₂O₃*Fe₂O₃) vor. Im Sinne der vorliegenden Erfindung kann grundsätzlich ein beliebiger Zement eingesetzt werden, wie beispielsweise Portlandzement, Portlandkompositzement, Hochofenzement, Puzzolanzement oder Kompositzement. Bevorzugt wird erfindungsgemäß Portlandzement eingesetzt. Bezogen auf den Gesamtfeststoffgehalt des wässrigen Gemischs von Schritt (i) wird Zement in einer Menge von etwa 25 bis 45 Gew.-%, beispielsweise etwa 30 bis 40 Gew.-% eingesetzt. Die Verwendung von Zement, z.B. Portland-Zement, in dieser Menge hat den Vorteil, dass das hergestellte Baumaterial eine hohe Zugfestigkeit aufweist. Die Rohmischung hat eine lange offene Verarbeitungszeit, so dass ein Mischer, in welchem das wässrige Gemisch in Schritt (i) bereitgestellt wird, nur bei längeren Stillstandszeiten zwischen den Mischvorgängen zu reinigen ist.

Den Ausgangsmaterialien für ein erfindungsgemäßes Baumaterial kann außerdem Rückgut in Form eines Pulvers oder Granulats, insbesondere als Suspension, zugesetzt werden. Unter dem Begriff "Rückgut" werden Altmaterialien in zerkleinerter Form verstanden. Beispielsweise können zu Pulver zerkleinerte Reststücke von erfindungsgemäßem Baumaterial oder beim Zerschneiden des Materials zu Platten anfallender Staub eingesetzt werden. Auch Pulver oder Granulate anderer mineralischer Baustoffe auf Calziumsilikathydrat-Basis sind geeignet. Das Rückgut kann beispielsweise in einer Menge von etwa 3 bis 7 Gew.-% bezogen auf den Gesamtfeststoffgehalt des wässrigen Gemischs von Schritt (i) eingesetzt werden.

Kaolin oder Meta-Kaolin kann als optionaler Bestandteil dem wässrigen Gemisch von Schritt (i) zugegeben werden. Bevorzugt wird Kaolin in einer Menge von etwa 5 bis 10 Gew.-%, insbesondere etwa 6 bis 8 Gew.-% eingesetzt. Kaolin setzt als puzzolanischer Zuschlagstoff die Hydrationswärme und somit Spannungen herab.

Ein Erhärtungsbeschleuniger im Sinne der Erfindung dient der Beschleunigung des Erhärtens und verbessert vor allem die Anfangsfestigkeit des Materials. Geeignet sind insbesondere Erhärtungsbeschleuniger auf Basis einer Kombination von Calciumnitrat, Natriumnitrat und N-Methyldiethanolamin wie z. B der Erhärtungsbeschleuniger X-Seed erhältlich von der Firma BASF. Weitere zur Verwendung bei der erfindungsgemäßen Herstellung eines Baumaterials geeignete Erhärtungsbeschleuniger sind in den internationalen Patentanmeldungen WO 2010/026155 und WO 2011/131378 beschrieben. Ein Erhärtungsbeschleuniger wird im Sinne der Erfindung vorzugsweise in einer Menge von etwa 3 bis 8 Gew.-% bezogen auf den Gesamtfeststoffgehalt des wässrigen Gemischs von Schritt (i) eingesetzt.

Das Verhältnis von Wasser zu Feststoff wird in dem wässrigen Gemisch von Schritt (i) so gewählt, dass es etwa 0,5:1 bis 1,5:1 beträgt, vorzugsweise etwa 0,6:1 bis 1:1. Mit abnehmendem Wasser-zu-Feststoff-Verhältnis nimmt die Viskosität vor und insbesondere nach Zugabe des Schaums deutlich zu. Außerdem konnte eine Zunahme der Grünstandsfestigkeit festgestellt werden. Das Unterrühren des Schaums wird mit abnehmendem Wasser-zu-Feststoff-Verhältnis jedoch schwieriger. Andererseits sollte das Verhältnis von Wasser zu Feststoff auch nicht wesentlich vergrößert werden, da hierdurch die Gussstabilität verringert, die Ansteifungszeit verlängert und die Wassermenge im Block erhöht wird, was aus trocknungstechnischen Gründen nachteilig ist. Ein Wasser-zu-Feststoff-Verhältnis von 0,6:1 bis 1:1 ist empfehlenswert, da hier eine gute Homogenisierung beim Mischen und gute Produkteigenschaften erreicht werden.

Grundsätzlich ist es möglich, dem wässrigen Gemisch von Schritt (i) auch organische oder anorganische Fasern zuzusetzen. In einem bevorzugten Aspekt der Erfindung enthält das wässrige Gemisch von Schritt (i) jedoch keine organischen oder anorganischen Fasern. Es wurde gefunden, dass die Anwesenheit von Fasern sich nachteilig auf die Porosität des hergestellten Materials auswirkt. Insbesondere kann sich die Standzeit verlängern, da Fasern unkontrolliert Wasser abgeben können. Die über den Aufschäumvorgang eingebrachten feinporigen Luftblasen werden zerstört. Falls jedoch eine besonders hohe Festigkeit des Baumaterials im Vordergrund steht, können Fasern wie z. B. Zellulosefasern, Carboxymethylcellulose, Kokosnussfasern oder Glasfasern als Zusatzstoffe verwendet werden.

Nach dem Vermischen der verschiedenen Bestandteile in Schritt (i) beträgt die Temperatur des wässrigen Gemischs vorzugsweise etwa 19 bis 30°C. Weiter bevorzugt ist eine Temperatur im Bereich von etwa 20 bis 25°C. Diese Temperatur kann beispielsweise durch Wahl der Temperatur des verwendeten Wassers in Abhängigkeit von der Temperatur der Feststoffe eingestellt werden.

Die Bereitstellung des wässrigen Gemischs in Schritt (i) erfolgt vorzugsweise in einem Mischer, insbesondere einem Vertikalmischer. Der Vorteil in der Verwendung eines Vertikalmischers besteht darin, dass das wässrige Gemisch an der Unterseite kontinuierlich abgeführt werden kann, ohne dass größere Mengen an Luft mitgelangen.

In das wässrige Gemisch aus Schritt (i) wird im darauffolgenden Schritt (ii) wenigstens ein Schaumbildner eingebracht. Das Einbringen des Schaumbildners kann vor oder gleichzeitig mit dem Aufschäumen des Gemischs in Schritt (iii) erfolgen. In einer ersten bevorzugten Ausführungsform wird zunächst wenigstens ein Schaumbildner in das wässrige Gemisch aus Schritt (i) eingebracht, bevor das mit Schaumbildner versetzte wässrige Gemisch in einem anschließenden Schritt aufgeschäumt wird. In einer alternativen Ausführungsform wird das wässrige Gemisch aus Schritt (i) zunächst in einen Oszillationsmischer überführt, in welchen direkt der Schaumbildner zudosiert wird und in welchem das Aufschäumen des Gemischs unter Zufuhr eines Gases erfolgt.

Wenn der Schaumbildner vor dem Aufschäumen in das wässrige Gemisch eingebracht wird, ist hierfür vorzugsweise ein weiterer Mischer, z. B. Vertikalmischer, vorgesehen, in den zum einen das wässrige Gemisch aus Schritt (i) und zum anderen wenigstens ein Schaumbildner zudosiert werden. Dies geschieht vorzugsweise unter Bedingungen, bei denen die Zufuhr größerer Mengen an Luft vermieden wird. Die Anwesenheit von Luft oder anderen Gasen hätte ansonsten zur Folge, dass der Schaumbildner bereits aufschäumt. Erfindungsgemäß erfolgt ein Aufschäumen jedoch bevorzugt erst, nachdem der Schaumbildner möglichst homogen in das wässrige Gemisch aus Schritt (i) eingemischt wurde.

Als Schaumbildner eignen sich im Sinne der Erfindung insbesondere Tenside und Proteine. Diese können wahlweise mit Stabilisatoren oder Hilfsstoffen kombiniert werden. Tenside können grundsätzlich beliebig aus natürlichen und synthetischen Tensiden ausgewählt werden. Bevorzugt werden erfindungsgemäß anionische oder nicht ionische Tenside oder Mischungen davon eingesetzt. Es wurde erfindungsgemäß gefunden, dass sich für die Herstellung von hydrophobiertem mineralischem Baumaterial besonders nichtionische Tenside und Proteine als Schaumbildner eignen.

Das ggf. bereits mit einem Schaumbildner vermischte Gemisch aus Schritt (i) wird anschließend in einen Oszillationsmischer überführt und dort unter Zufuhr eines Gases, insbesondere Luft, aufgeschäumt. Sofern der Schaumbildner nicht bereits vorab zugegeben wurde, erfolgt in dem Oszillationsmischer auch die Zudosierung des Schaumbildners. Ein für die Verwendung in der vorliegenden Erfindung geeigneter Oszillationsmischer umfasst vorzugsweise eine Kammer, in die das Ausgangsgemisch, z. B. das mit Schaumbildner vermischte wässrige Gemisch aus Schritt (ii) oder das Gemisch aus Schritt (i), eingebracht und dort mit Gas, insbesondere Luft, versetzt wird. Zu diesem Zweck umfasst die Kammer ein feststehendes Aufschäumelement, das zum Einbringen von Gas in die Kammer ausgebildet ist. Die Kammer wird über eine Antriebseinrichtung in eine oszillierende Rotationsbewegung um ihre Mittelachse versetzt. Wenn der Schaumbildner erst direkt in den Oszillationsmischer zugegeben wird, umfasst dieser zusätzlich eine Vorrichtung für das Einbringen von Schaumbildner in die Kammer.

Die Bedingungen des Aufschäumens im Oszillationsmischer werden vorzugsweise so gewählt, dass ein aufgeschäumtes Gemisch mit einer Rohdichte im Bereich von 40 bis 120 kg/m³, vorzugsweise 60 bis 100 kg/m³, entsteht. Es wurde gefunden, dass sich so besonders homogene Produkte mit guter und gleichmäßiger Festigkeit ergeben.

Die Temperatur des in Schritt (iii) erzeugten aufgeschäumten Gemischs entspricht vorteilhafterweise im Wesentlichen der Temperatur des wässrigen Gemischs von Schritt (i). Bevorzugt ist eine Temperatur von etwa 19 bis 30°C, weiter bevorzugt etwa 20 bis 25°C. Vorteilhafterweise sollte die Temperatur um nicht mehr als 5 K von der Temperatur des wässrigen Gemischs von Schritt (i) abweichen.

Gemäß der Erfindung kann das mit Schaumbildner vermischte Gemisch aus Schritt (ii) direkt oder über einen oder mehrere Vorlagebehälter, beispielsweise einen weiteren Vertikalmischer, in einen Oszillationsmischer überführt werden. Dadurch kann gewährleistet werden, dass der Oszillationsmischer auch bei einem kontinuierlichen Betrieb keine Luft zieht und ein Aufschäumen ausschließlich durch das gezielt in den Oszillationsmischer eingeblasene Gas erfolgt. Auf diese Weise kann die Porosität des resultierenden Gemischs genau reguliert werden.

Das aufgeschäumte Gemisch aus Schritt (iii) wird anschließend in Schritt (iv) zu einem weiteren Mischer, vorzugsweise Horizontalmischer, überführt und dort bei geringer Drehzahl vermischt, um eine Rohmischung zu erhalten. Das Vermischen in dem weiteren Mischer dient dazu, das aufgeschäumte Gemisch zu homogenisieren und zu vermeiden, dass sich in dem Material Bereiche mit besonders hoher oder besonders niedriger Porosität ausbilden. Der weitere (Horizontal-)Mischer wird mit geringer Drehzahl betrieben, vorzugsweise im Bereich von 20 bis 200 UpM, beispielsweise 30 bis 70 UpM. Bei einer derart geringen Drehzahl bleiben die durch das Aufschäumen erzeugten Bläschen erhalten und verteilen sich gleichmäßig über das Material. Das aufgeschäumte Gemisch verbleibt vorzugsweise nur für kurze Zeit, beispielsweise 10 Sekunden bis 10 Minuten oder 20 Sekunden bis 1 Minute in dem (horizontalen) Mischer und wird dann möglichst rasch in eine Form abgeleitet.

Bei dem Überführen des aufgeschäumten Gemischs aus dem Oszillationsmischer in den weiteren Mischer kann sich dieser noch im Stillstand oder bereits bei geringer Drehzahl wie oben angegeben befinden. Abhängig davon variiert die Verweilzeit des aufgeschäumten Gemischs in dem weiteren Mischer. Das Ableiten aus dem weiteren Mischer in die Form erfolgt möglichst rasch in einem Schritt, wobei es ebenfalls möglich ist, aus einem weiteren Mischer mehrere Formen (parallel) zu befüllen oder eine Form mit dem Mischgut aus mehreren weiteren Mischern zu befüllen.

Anstelle eines horizontalen Mischers eignet sich selbstverständlich auch ein Vertikal- oder anderer Mischer.

In einer alternativen Ausführungsform der Erfindung kann das aufgeschäumte Gemisch aus dem Oszillationsmischer auch direkt in die Form abgelassen werden und in der Form nochmals kurz durchmischt werden. Beispielsweise können Mischwerkzeuge von oben in die gefüllte Form eintauchen und das aufgeschäumte Gemisch durchmischen. Auch bei dieser Ausführungsvariante wird das Mischwerkzeug mit geringer Drehzahl betrieben, vorzugsweise im Bereich von 20 bis 200 UpM, um zu gewährleisten, dass die durch das Aufschäumen erzeugten Bläschen erhalten bleiben und sich gleichmäßig über das Material verteilen. Beispielsweise ist es möglich, die Mischwerkzeuge in das aufgeschäumte Material einzutauchen und bei geringer Drehzahl durch die Form zu bewegen, um eine Homogenisierung zu erreichen und zu vermeiden, dass sich in dem Material Bereiche mit besonders hoher oder besonders niedriger Porosität ausbilden.

Die erhaltene Rohmischung wird in Schritt (v) in eine Form eingebracht. In dieser Form verbleibt die Rohmischung für mindestens 5 h, bevorzugt für mindestens 10 h und besonders bevorzugt für mindestens 15 h, um ein Rohmaterial zu erhalten. Vorzugsweise verbleibt die Rohmischung für 6 bis 72 h in der Form. Die Temperatur wird dabei vorzugsweise so gewählt, dass sie in etwa der Ausgangstemperatur des wässrigen Gemischs und des aufgeschäumten Gemischs entspricht. Bevorzugt weicht die Temperatur um nicht mehr als 5 K von der Ausgangstemperatur des wässrigen Gemischs und des aufgeschäumten Gemischs ab.

Das Rohmaterial wird in Schritt (vi) dampfgehärtet, dies ggf. nach Aufteilen, insbesondere Zerschneiden, in kleinere Portionen. Hierzu wird das Rohmaterial in einen Autoklaven eingebracht und bei geeigneten Druck- und Temperaturbedingungen gehärtet. Vorteilhafterweise ist der Druck in dem Autoklaven zunächst gegenüber Atmosphärendruck um 0,02 bis 0,05 MPa (0,2 bis 0,5 bar) abgesenkt. Durch das Evakuieren kann die Masse schneller aufgewärmt und auf maximale Temperatur gebracht werden. Je intensiver die Vakuumbehandlung, umso geringer ist die Temperaturdifferenz zwischen dem Zentrum des Blocks und dem Dampfraum. Durch langsames Aufdampfen des Autoklaven werden Temperaturunterschiede zwischen inneren und äußeren Blockbereichen verringert, so dass Thermospannungen, die zu Rissen führen, vermieden werden. Als günstig hat sich eine langsame Aufheizrate erwiesen, wobei im unteren Druckbereich ein kleiner Aufheizgradient notwendig ist, um ein Zerfließen bzw. Zerstören des gewünschten Materials zu vermeiden. Mit Aufheizzeiten von ca. 1 bis 4 h ist eine rissfreie Härung möglich. Zur Erhöhung der Verfahrenssicherheit beträgt die daran anschließende Haltezeit 8 h bei einem Haltedruck von 1.2 MPa (12 bar). Da ein zu schnelles Abdampfen zu Härteschäden im Material führen würde, sollte die Abdampfzeit bei 2 bis 4,5 h liegen.

Bei dem Schritt des Dampfhärtens in einem Autoklaven kann das Rohmaterial sich wahlweise noch in der Form befinden oder die Form kann zuvor zumindest teilweise entfernt werden.

In einer bevorzugten Ausführungsform der Erfindung wird die Form vor dem Dampfhärten bis auf den Formboden entfernt. Das auf dem Formboden befindliche Rohmaterial kann dann optional noch weiter vorgelagert werden (z. B. 6 bis 72h) bis es dann, weiterhin auf dem Formboden befindlich, in den Autoklaven eingeführt und dort dampfgehärtet wird. Der Formboden dient dabei einer Stabilisierung des ansonsten fragilen Rohmaterials.

Nach dem Dampfhärten kann das Material wahlweise in kleinere Blöcke geschnitten werden. Ebenfalls möglich und sogar zu empfehlen ist es, bereits das Rohmaterial vor dem Schritt des Dampfhärtens in kleinere Stücke zu zerteilen.

In Schritt (vii) des erfindungsgemäßen Verfahrens erfolgt eine Trocknung des dampfgehärteten Rohmaterials.

Das aus dem Trocknungsprozess stammende Wasser und/oder Kondensat aus dem Dampfhärtungsverfahren im Autoklaven kann aufgefangen und ggf. nach Aufarbeitung dem wässrigen Ausgangsgemisch von Schritt (i) des erfindungsgemäßen Verfahrens zugegeben werden. Dies bewirkt eine verbesserte Festigkeit des Materials bzw. eine bessere Wirkung des Zements. Vor allem die Wiederverwendung von Kondensat aus dem Autoklavierungsprozess hat sich hier als besonders vorteilhaft erwiesen. Falls gewünscht schließt an die Trocknung eine mechanische Nachbearbeitung des erhaltenen Materials an. Das Material kann beispielsweise auf ein gewünschtes Format zugesägt werden. Die Nachbearbeitung kann weiter auch eine Grundierung oder Hydrophobierung einschließen, um beispielsweise die Witterungsbeständigkeit des Materials zu erhöhen. Auch eine Beschichtung des Materials ist möglich.

Ein poröses mineralisches Baumaterial, welches nach dem erfindungsgemäßen Verfahren erhältlich ist, weist insbesondere eine Rohdichte von 80 bis 130 kg/m³ auf. Durch die erfindungsgemäße Herstellungsweise ist es überraschenderweise möglich, zum einen die Wärmeleitfähigkeit signifikant herabzusetzen und einen Wärmeleitwert Lambda von weniger als 0,040 W/mK zu erreichen. Zum anderen gelingt es, eine hohe mechanische Festigkeit des Materials zu gewährleisten. Das erfindungsgemäß hergestellte Baumaterial zeichnet sich bevorzugt durch eine im Vergleich zu auf andere Weise aus den gleichen Bestandteilen erhaltenem hydrothermal gehärtetem Schaumbeton deutlich verbesserte Druckfestigkeit und Biegezugfestigkeit aus. Es eignet sich daher insbesondere als Dämmmaterial zur Wärmedämmung sowie als Brandschutzmaterial.

Für die Herstellung eines hierin beschriebenen porösen mineralischen Baumaterials ist es wesentlich, mindestens einen Schaumbildner in ein wässriges Baustoffgemisch einzubringen und die resultierende Mischung durch Einbringen von Gas aufzuschäumen. Hierfür wird gemäß einem weiteren Gegenstand der vorliegenden Erfindung eine Vorrichtung bereitgestellt, umfassend:
a) mindestens einen ersten Mischer, vorzugsweise Vertikalmischer, umfassend eine Kammer mit darin beweglich angeordneten Mischwerkzeugen,
b) mindestens einen zweiten Mischer, vorzugsweise Vertikalmischer, umfassend eine Kammer mit darin beweglich angeordneten Mischwerkzeugen und eine Vorrichtung für die Zudosierung eines Schaumbildners in die Kammer,
c) mindestens einen Oszillationsmischer, umfassend eine Kammer, eine Antriebseinrichtung zur Erzeugung einer oszillierenden Rotationsbewegung der Kammer um ihre Mittelachse und wenigstens ein feststehendes, in der Kammer angeordnetes Aufschäumelement, das zum Einbringen von Gas in die Kammer ausgebildet ist,
d) mindestens einen weiteren Mischer, vorzugsweise Horizontalmischer, umfassend beweglich angeordnete Mischwerkzeuge, und
e) Leitungen zum Überführen eines Gemischs aus dem ersten Mischer in den zweiten Mischer, von dort in den Oszillationsmischer und von dort zu dem weiteren Mischer, jeweils ggf. über ein oder mehrere Zwischenstationen.

In einer alternativen Ausführungsform der Erfindung kann auf den mindestens einen zweiten Mischer verzichtet werden, wenn der Oszillationsmischer zusätzlich wenigstens eine Vorrichtung für die Zudosierung eines Schaumbildners in die Kammer umfasst. Gemäß dieser Ausführungsform stellt die vorliegende Erfindung eine Vorrichtung bereit, umfassend
a) mindestens einen ersten Mischer, vorzugsweise Vertikalmischer, umfassend eine Kammer mit darin beweglich angeordneten Mischwerkzeugen,
b) mindestens einen Oszillationsmischer, umfassend eine Kammer, eine Antriebseinrichtung zur Erzeugung einer oszillierenden Rotation der Kammer um ihre Mittelachse, wenigstens ein feststehendes, in der Kammer angeordnetes Aufschäumelement, das zum Einbringen von Gas in die Kammer ausgebildet ist, und mindestens eine Vorrichtung für die Zudosierung eines Schaumbildners in die Kammer,
c) mindestens einen weiteren Mischer, vorzugsweise Horizontalmischer, umfassend beweglich angeordnete Mischwerkzeuge, und
d) Leitungen zum Überführen eines Gemischs aus dem ersten Mischer in den Oszillationsmischer und von dort zu dem weiteren Mischer, jeweils ggf. über eine oder mehrere Zwischenstationen.

Bei dem ersten und dem zweiten Mischer handelt es sich jeweils vorzugsweise um einen oder mehrere Vertikalmischer, die eine Kammer mit darin beweglich angeordneten Mischwerkzeugen umfassen. Aus den Vertikalmischern wird das erzeugte Gemisch vorzugsweise an der Unterseite abgeleitet, um zu verhindern, dass Luft mit abgeführt wird und in die darauffolgende Vorrichtung gelangt. Dementsprechend sind auch die Leitungen zum Überführen eines Gemischs aus dem ersten Mischer in den zweiten Mischer und von dort ggf. über weitere Stationen in den Oszillationsmischer so konzipiert, dass ein Einbringen von Luft oder anderen Gasen im Wesentlichen vermieden wird.

Der zweite Mischer ist, falls vorhanden, so konzipiert, dass in diesem über entsprechende Leitungen das Mischgut aus dem ersten Mischer (a) und mindestens ein Tensid eingebracht werden können. Hierfür umfasst der zweite Mischer eine Vorrichtung für die Zudosierung mindestens eines Schaumbildners in die Kammer.

Der Auslass des zweiten Mischers ist ggf. über weitere Zwischenstationen über Leitungen mit mindestens einem Oszillationsmischer verbunden. Als Zwischenstationen können beispielsweise weitere Mischer, insbesondere ein oder mehrere Vertikalmischer, dienen. Diese fungieren als Vorlagevorrichtung, so dass bei einem kontinuierlichen Betrieb immer ausreichend Baustoffmasse zur Verfügung steht, die in den mindestens einen Oszillationsmischer überführt werden kann, um ein Luftziehen zu vermeiden.

Ein Oszillationsmischer im Sinne der vorliegenden Erfindung umfasst eine Kammer, eine Antriebseinrichtung zur Erzeugung einer oszillierenden Rotationsbewegung der Kammer um ihre Mittelachse und wenigstens ein feststehendes, in der Kammer angeordnetes Aufschäumelement, das zum Einbringen von Gas in die Kammer ausgebildet ist. Sofern kein zweiter Mischer vorhanden ist, weist der Oszillationsmischer zusätzlich eine Vorrichtung für die Zudosierung eines Schaumbildners in die Kammer auf. Besonders bevorzugt handelt es sich um einen Oszillationsmischer wie in dem europäischen Patent EP 1 716 915 B1 beschrieben.

Der Auslass des Oszillationsmischers führt zu mindestens einem weiteren Mischer. Bei dem weiteren Mischer kann es sich beispielsweise um einen Horizontalmischer handeln, welcher eine Kammer mit darin beweglich angeordneten Mischwerkzeugen umfasst. Alternativ oder zusätzlich kann der weitere Mischer auch bewegliche Mischwerkzeuge umfassen, die in eine Form eingetaucht, durch diese bewegt und wieder aus dieser entfernt werden können. Der weitere Mischer ist so konzipiert, dass er mit niedrigen Drehzahlen betrieben werden kann, beispielsweise 20 bis 200 UpM, bevorzugt 25 bis 50 UpM.

In der erfindungsgemäßen Vorrichtung zur Herstellung eines porösen mineralischen Baumaterials können jeweils ein oder mehrere der genannten Mischer eingesetzt werden. Beispielsweise ist es möglich, mehrere Vertikalmischer parallel anzuordnen. Ebenfalls ist es möglich, zwei oder mehrere Oszillationsmischer parallel anzuordnen. Gleiches gilt für den mindestens einen weiteren Mischer, z. B. Horizontalmischer. Beispielsweise kann die erfindungsgemäße Vorrichtung einen ersten Vertikalmischer, einen zweiten Vertikalmischer, einen weiteren Vertikalmischer als Vorlagebehälter, zwei, drei oder vier parallel geschaltete Oszillationsmischer und zwei oder drei Horizontalmischer umfassen. Die Mischer sind über Leitungen so miteinander verbunden, dass eine Überführung aus dem ersten Vertikalmischer in den zweiten Vertikalmischer, von dort in den weiteren Vertikalmischer, der als Vorlagebehälter dient und aus diesem parallel in mehrere Oszillationsmischer möglich ist. Aus den parallelen Oszillationsmischern führen Ableitungen zu individuell zugeordneten oder gemeinsamen Horizontalmischern. Beispielsweise können die Ableitungen der Horizontalmischer zusammengeführt und in einen, zwei, drei oder mehrere parallel angeordnete Horizontalmischer führen.

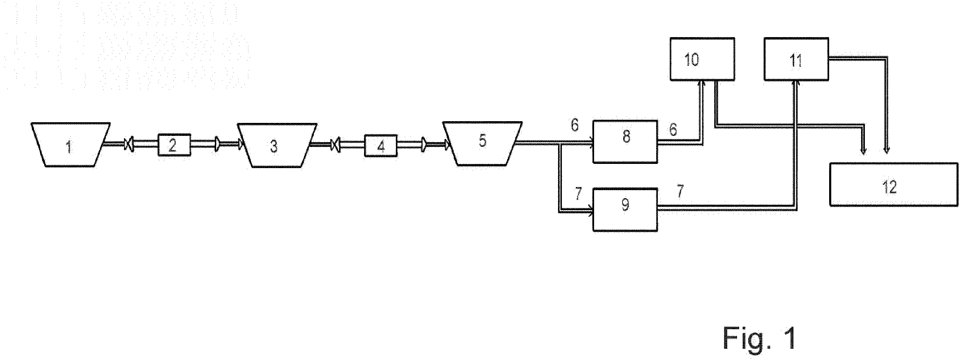

**Figur 1** veranschaulicht in Form eines Fließschemas den Ablauf eines erfindungsgemäßen Verfahrens zur Herstellung von porösem mineralischem Baumaterial auf Calziumsilikathydrat-Basis.

Der Ablauf des Verfahrens sieht vor, dass zunächst abgemessene Mengen an SiO₂, Kalkhydrat, Zement und Erhärtungsbeschleuniger sowie ggf. weitere Feststoffen wie z. B. Hydrophobierungsmittel und Wasser zu einem ersten Vormischer (1) zugegeben werden. Aus diesen Bestandteilen wird im ersten Vormischer (1) ein wässriges Gemisch hergestellt, welches über eine Pumpe (2) in einen zweiten Vormischer (3) weitergeleitet wird. In den zweiten Vormischer (3) wird außerdem ein Schaumbildner, z. B. Tensid oder Protein, eingebracht, welches in das wässrige Gemisch eingemischt wird. Aus dem zweiten Vormischer (3) wird das Mischgut über eine Pumpe (4) in einen Vorlagebehälter (5) geleitet. Dieser stellt sicher, dass immer ausreichend Material für die Befüllung der nachfolgenden Oszillationsmischer zur Verfügung steht, so dass diese keine Luft ziehen. Aus dem Vorlagebehälter (5) wird das mit Schaumbildner vermischte Gemisch über Pumpen (6, 7) in zwei parallele Oszillationsmischer (8, 9) transportiert, wo das Material durch Zufuhr von Luft aufgeschäumt wird. Das aufgeschäumte Gemisch aus den Oszillationsmischern (8, 9) wird über Pumpen (6, 7) zu jeweils einem Horizontalmischer (10, 11) geleitet, in dem eine Homogenisierung des Materials erfolgt. Aus beiden parallelen Horizontalmischern (10, 11) wird eine Gießform (12) befüllt, in der das Material bis zur Grünstandsfestigkeit belassen wird.

Variationen des in Figur 1 dargestellten Verfahrensablaufs sind selbstverständlich möglich. Beispielsweise kann auf den zweiten Vormischer (3) verzichtet und der Schaumbildner stattdessen bereits in den ersten Vormischer (1), in den Vorlagebehälter (5) oder in den Oszillationsmischer (8, 9) zugegeben werden. Der Vorlagebehälter (5) kann ebenfalls weggelassen werden und das Mischgut direkt aus dem ersten Vormischer (1) oder, falls vorhanden, dem zweiten Vormischer (3) in den Oszillationsmischer (8, 9) zugeführt werden.

Während in Figur 1 zwei Oszillationsmischer (8, 9) und zwei Horizontalmischer (10, 11) parallel angeordnet sind, kann selbstverständlich auch nur ein Oszillationsmischer und/oder nur ein Horizontalmischer eingesetzt werden. Ebenfalls ist es möglich, auf einen Horizontalmischer (10, 11) zu verzichten und stattdessen das Material direkt in der Form (12) zu homogenisieren, beispielsweise anhand von in die Form eintauchbaren beweglichen Mischwerkzeugen.

Für den Weitertransport des Materials sind in Figur 1 jeweils separate Pumpen (2, 4, 6, 7) vorgesehen. Alternativ können Pumpen auch Bestandteil der jeweiligen Mischer sein. Beispielsweise können Oszillationsmischer (8, 9) Pumpen (6, 7) beinhalten, welche den Transport von Material in den Mischer und den Abtransport aus dem Mischer bewerkstelligen.

Außerdem ist es möglich, auf Pumpen zu verzichten, wenn die verschiedenen Stationen des Herstellungsverfahrens derart zueinander angeordnet sind, dass der Weitertransport zur nächsten Station mit Hilfe der Schwerkraft bewerkstelligt wird. Beispielsweise könnte ein Vertikalmischer oberhalb eines nachgeschalteten Mischers angeordnet sein, so dass das Mischgut aus dem Vertikalmischer aus dessen Auslass in den tiefer liegenden nachgeschalteten Mischer fällt.

## Patentansprüche

1. Verfahren zur Herstellung eines porösen mineralischen Baumaterials auf Calziumsilikathydrat-Basis, umfassend die Schritte:
(i) Bereitstellen eines wässrigen Gemischs, welches Wasser, SiO₂, Kalkhydrat, Zement und einen Erhärtungsbeschleuniger umfasst,
(ii) Einbringen wenigstens eines Schaumbildners in das wässrige Gemisch aus Schritt (i),
(iii) Aufschäumen des Gemischs aus Schritt (ii) unter Zufuhr eines Gases, insbesondere Luft, in einem Oszillationsmischer, um ein aufgeschäumtes Gemisch zu erhalten,
(iv) Überführen des aufgeschäumten Gemischs aus Schritt (iii) zu einem weiteren Mischer, vorzugsweise Horizontalmischer, und Vermischen mit geringer Drehzahl vorzugsweise im Bereich von 20-200 UpM, um eine Rohmischung zu erhalten,
(v) Belassen der Rohmischung aus Schritt (iv) in einer Form für mindestens 5h, vorzugsweise für mindestens 10 h und besonders bevorzugt mindestens 15 h in der Form, um ein Rohmaterial zu erhalten,
(vi) Dampfhärten des in Schritt (v) erhalten Rohmaterials in einem Autoklaven, dies ggf. nach Zuschneiden in Teile und
(vii) Trocknen des dampfgehärteten Rohmaterials.

2. Verfahren nach Anspruch 1, wobei das wässrige Gemisch in Schritt (i) mindestens einen weiteren Bestandteil umfasst, der ausgewählt ist aus Kaolin, Rückgut, Hydrophobierungsmittelen, weiteren Betonzusatzstoffen und Gemischen davon.

3. Verfahren nach einem der vorhergehenden Ansprüche, wobei das wässrige Gemisch in Schritt (i) bezogen auf den Gesamtfeststoffgehalt
25-35 Gew.-% SiO₂,
18-35 Gew.-% Kalkhydrat,
25-45 Gew.-% Zement
ggf. 5-10 Gew.-%, vorzugsweise 6-8 Gew.-% Kaolin, und
3-8 Gew.-% Erhärtungsbeschleuniger umfasst.

4. Verfahren nach einem der vorhergehenden Ansprüche, wobei das Verhältnis von Wasser zu Feststoff in dem wässrigen Gemisch von Schritt (i) etwa 0,5:1 bis 1,5:1, vorzugsweise 0,6:1 bis 1:1 beträgt.

5. Verfahren nach einem der vorhergehenden Ansprüche, wobei das wässrige Gemisch in Schritt (i) keine organischen oder anorganischen Fasern umfasst.

6. Verfahren nach einem der vorhergehenden Ansprüche, wobei die Temperatur des wässrigen Gemischs von Schritt (i) etwa 19-30°C, vorzugsweise etwa 20-25°C beträgt.

7. Verfahren nach einem der vorhergehenden Ansprüche, wobei in Schritt (i) Wasser, SiO₂, Kalkhydrat, Zement, Erhärtungsbeschleuniger und ggf. weitere Bestandteile in einem ersten Vertikalmischer vermischt werden.

8. Verfahren nach einem der vorhergehenden Ansprüche, wobei das wässrige Gemisch aus Schritt (i) in einen zweiten Mischer, vorzugsweise Vertikalmischer, überführt und dort in Schritt (ii) mit wenigstens einem Schaumbildner vermischt wird, vorzugsweise unter Bedingungen, bei denen ein Aufschäumen im Wesentlichen vermieden wird.

9. Verfahren nach Anspruch 8, wobei das Gemisch aus Schritt (ii) direkt oder über Vorlagebehälter, beispielsweise einen dritten Vertikalmischer in einen Oszillationsmischer überführt wird, in den Gas, vorzugsweise Luft, eingeblasen wird, um das Gemisch aufzuschäumen.

10. Verfahren nach einem der Ansprüche 1 bis 7, wobei die Schritte (ii) und (iii) gemeinsam in einem Oszillationsmischer durchgeführt werden.

11. Verfahren nach einem der vorhergehenden Ansprüche, wobei die Rohdichte des aufgeschäumten Gemischs in Schritt (iii) 40 bis 120 kg/m³, vorzugsweise 60 bis 100 kg/m³ beträgt.

12. Verfahren nach einem der vorhergehenden Ansprüche, wobei in Schritt (iv) das aufgeschäumte Gemisch aus Schritt (iii) aus dem Oszillationsmischer direkt in eine Form abgelassen wird und in der Form durch bewegliche Mischwerkzeuge, die vorzugsweise durch die Form bewegt werden, vermischt wird.

13. Verfahren nach einem der Ansprüche 1 bis 11, wobei in Schritt (iv) das aufgeschäumte Gemisch aus Schritt (iii) aus dem Oszillationsmischer in einen weiteren Mischer, vorzugsweise Horizontalmischer, überführt wird, darin mit geringer Drehzahl vermischt und daraus in eine Form abgelassen wird.

14. Verfahren nach einem der vorhergehenden Ansprüche, wobei die Rohmischung für 6-72 h in der Form verbleibt, vorzugsweise bei einer im Wesentlichen konstanten Temperatur, wobei die Temperatur bevorzugt in etwa der Ausgangstemperatur des aufgeschäumten Gemischs entspricht.

15. Verfahren nach einem der vorhergehenden Ansprüche, wobei die Form vor dem Dampfhärten teilweise oder vollständig entfernt.

16. Verfahren nach einem der vorhergehenden Ansprüche, wobei das Rohmaterial aus Schritt (v) in kleinere Teilstücke zerteilt wird.

17. Verfahren nach einem der vorhergehenden Ansprüche, wobei das getrocknete Material nach Schritt (vii) mechanisch bearbeitet wird.

18. Vorrichtung zur Herstellung eines porösen mineralischen Baumaterials, umfassend:
a) mindestens einen ersten Mischer (1), vorzugsweise Vertikalmischer, umfassend eine Kammer mit darin beweglich angeordneten Mischwerkzeugen,
b) mindestens einen zweiten Mischer (3), vorzugsweise Vertikalmischer, umfassend eine Kammer mit darin beweglich angeordneten Mischwerkzeugen und eine Vorrichtung für die Zudosierung eines Schaumbildners in die Kammer,
c) mindestens einen Oszillationsmischer (8, 9), umfassend eine Kammer, eine Antriebseinrichtung zur Erzeugung einer oszillierenden Rotationsbewegung der Kammer um ihre Mittelachse und wenigstens ein feststehendes, in der Kammer angeordnetes Aufschäumelement, das zum Einbringen von Gas in die Kammer ausgebildet ist,
d) mindestens einen weiteren Mischer (10, 11), vorzugsweise Horizontalmischer, umfassend beweglich angeordnete Mischwerkzeuge, und
e) Leitungen zum Überführen eines Gemischs aus dem ersten Mischer (1) in den zweiten Mischer (3), von dort in den Oszillationsmischer (8, 9) und von dort zu dem weiteren Mischer (10, 11), jeweils ggf. über ein oder mehrere Zwischenstationen.

19. Vorrichtung zur Herstellung eines porösen mineralischen Baumaterials, umfassend:
a) mindestens einen ersten Mischer (1), vorzugsweise Vertikalmischer, umfassend eine Kammer mit darin beweglich angeordneten Mischwerkzeugen,
b) mindestens einen Oszillationsmischer (8, 9), umfassend eine Kammer, eine Antriebseinrichtung zur Erzeugung einer oszillierenden Rotation der Kammer um ihre Mittelachse, wenigstens ein feststehendes, in der Kammer angeordnetes Aufschäumelement, das zum Einbringen von Gas in die Kammer ausgebildet ist, und mindestens eine Vorrichtung für die Zudosierung eines Schaumbildners in die Kammer,
c) mindestens einen weiteren Mischer (10, 11), vorzugsweise Horizontalmischer, umfassend beweglich angeordnete Mischwerkzeuge, und
d) Leitungen zum Überführen eines Gemischs aus dem ersten Mischer (1) in den Oszillationsmischer (8, 9) und von dort zu dem weiteren Mischer (10, 11), jeweils ggf. über eine oder mehrere Zwischenstationen.

20. Vorrichtung nach Anspruch 18, worin der erste Mischer (1) und der zweite Mischer (3) jeweils Vertikalmischer sind, und mindestens ein weiterer Vertikalmischer (5) als Vorlagebehälter zwischen dem zweiten Mischer (3) und dem Oszillationsmischer (7, 8) angeordnet ist.

21. Vorrichtung nach einem der Ansprüche 18-20, worin mehrere Oszillationsmischer (7, 8) parallel angeordnet sind.

22. Vorrichtung nach einem der Ansprüche 18-21, welche für den kontinuierlichen Betrieb ausgerichtet ist.

## Claims

1. Method for producing a porous mineral building material based on calcium silicate hydrate, comprising the steps of:
(i) providing an aqueous mixture which comprises water, SiO₂, calcium hydroxide, cement and a hardening accelerator,
(ii) introducing at least one foaming agent into the aqueous mixture from step (i),
(iii) foaming the mixture from step (ii) with the supply of a gas, in particular air, in an oscillation mixer in order to obtain a foamed mixture,
(iv) transferring the foamed mixture from step (iii) to a further mixer, preferably a horizontal mixer, and mixing at low speed, preferably in the range of 20-200 rpm, in order to obtain a raw mixture,
(v) leaving the raw mixture from step (iv) in a mould for at least 5 hours, preferably for at least 10 hours, and particularly preferably for at least 15 hours, in order to obtain a raw material,
(vi) steam-hardening the raw material obtained in step (v) in an autoclave, if necessary after cutting said raw material into parts; and
(vii) drying the steam-hardened raw material.

2. Method according to claim 1, wherein the aqueous mixture in step (i) comprises at least one further constituent selected from kaolin, recycled material, hydrophobising agents, further concrete additives, and mixtures thereof.

3. Method according to either of the preceding claims, wherein the aqueous mixture in step (i) comprises, based on the total solids content,
25-35 wt.% SiO₂,
18-35 wt.% calcium hydroxide,
25-45 wt.% cement
optionally 5-10 wt.%, preferably 6-8 wt.%, kaolin, and
3-8 wt.% hardening accelerator.

4. Method according to any of the preceding claims, wherein the ratio of water to solids in the aqueous mixture from step (i) is approximately 0.5:1 to 1.5:1, preferably 0.6:1 to 1:1.

5. Method according to any of the preceding claims, wherein the aqueous mixture in step (i) does not comprise any organic or inorganic fibers.

6. Method according to any of the preceding claims, wherein the temperature of the aqueous mixture from step (i) is approximately 19-30°C, preferably approximately 20-25°C.

7. Method according to any of the preceding claims, wherein in step (i) water, SiO₂, calcium hydroxide, cement, hardening accelerator and, if necessary, further constituents are mixed in a first vertical mixer.

8. Method according to any of the preceding claims, wherein the aqueous mixture from step (i) is transferred to a second mixer, preferably a vertical mixer, and in step (ii) is mixed there with at least one foaming agent, preferably under conditions in which foaming is substantially avoided.

9. Method according to claim 8, wherein the mixture from step (ii) is transferred directly or via storage containers, for example a third vertical mixer, into an oscillation mixer, into which gas, preferably air, is blown in order to foam the mixture.

10. Method according to any of claims 1 to 7, wherein steps (ii) and (iii) are carried out together in an oscillation mixer.

11. Method according to any of the preceding claims, wherein the bulk density of the mixture mixed with foam in step (iii) is 40 to 120 kg/m³, preferably 60 to 100 kg/m³.

12. Method according to any of the preceding claims, wherein in step (iv) the foamed mixture from step (iii) is discharged from the oscillation mixer directly into a mould and is mixed in the mould by movable mixing tools that are preferably moved through the mould.

13. Method according to any of claims 1 to 11, wherein in step (iv) the foamed mixture from step (iii) is transferred from the oscillation mixer to a further mixer, preferably a horizontal mixer, mixed therein at low speed, and discharged therefrom into a mould.

14. Method according to any of the preceding claims, wherein the raw mixture remains in the mould for 6-72 hours, preferably at a substantially constant temperature, wherein the temperature preferably corresponds approximately to the starting temperature of the foamed mixture.

15. Method according to any of the preceding claims, wherein the mould is partially or completely removed prior to steam-hardening.

16. Method according to any of the preceding claims, wherein the raw material from step (v) is divided into smaller pieces.

17. Method according to any of the preceding claims, wherein the dried material is mechanically processed following step (vii).

18. Apparatus for producing a porous mineral building material, comprising:
a) at least one first mixer (1), preferably a vertical mixer, comprising a chamber with mixing tools movably arranged therein,
b) at least one second mixer (3), preferably a vertical mixer, comprising a chamber with mixing tools movably arranged therein and a device for dosing a foaming agent into the chamber,
c) at least one oscillation mixer (8, 9), comprising a chamber, a drive device for generating an oscillating rotational movement of the chamber about the central axis thereof and at least one stationary foaming element arranged in the chamber, which foaming element is designed to introduce gas into the chamber,
d) at least one further mixer (10, 11), preferably a horizontal mixer, comprising movably arranged mixing tools, and
e) lines for transferring a mixture from the first mixer (1) to the second mixer (3), from there to the oscillation mixer (8, 9) and from there to the further mixer (10, 11), in each case optionally via one or more intermediate stations.

19. Apparatus for producing a porous mineral building material, comprising:
a) at least one first mixer (1), preferably a vertical mixer, comprising a chamber with mixing tools movably arranged therein,
b) at least one oscillation mixer (8, 9), comprising a chamber, a drive device for generating an oscillating rotation of the chamber about the central axis thereof, at least one stationary foaming element arranged in the chamber, which foaming element is designed to introduce gas into the chamber, and at least one device for dosing a foaming agent into the chamber,
c) at least one further mixer (10, 11), preferably a horizontal mixer, comprising movably arranged mixing tools, and
d) lines for transferring a mixture from the first mixer (1) to the oscillation mixer (8, 9) and from there to the further mixer (10, 11), in each case optionally via one or more intermediate stations.

20. Apparatus according to claim 18, wherein the first mixer (1) and the second mixer (3) are each vertical mixers, and at least one further vertical mixer (5) is arranged as a storage container between the second mixer (3) and the oscillation mixer (7, 8).

21. Apparatus according to any of claims 18-20, wherein a plurality of oscillation mixers (7, 8) are arranged in parallel.

22. Apparatus according to any of claims 18-21, which is designed for continuous operation.

## Revendications

1. Procédé de fabrication d'un matériau de construction minéral poreux à base d'hydrate de calcium SiO₂ comprenant les étapes suivantes :
(i) fournir un mélange aqueux comprenant de l'eau, du SiO₂, de la chaux hydratée, du ciment et un accélérateur de durcissement,
(ii) introduire au moins un agent moussant dans le mélange aqueux de l'étape (i),
(iii) faire mousser le mélange de l'étape (ii) tout en fournissant un gaz, en particulier de l'air, dans un mélangeur oscillant pour obtenir un mélange moussé,
(iv) transférer le mélange moussé de l'étape (iii) vers un autre mélangeur, de préférence un mélangeur horizontal, et le mélanger à faible vitesse, de préférence dans la plage de 20 à 200 tr/min, pour obtenir un mélange brut,
(v) laisser le mélange brut de l'étape (iv) dans un moule pendant au moins 5 h, de préférence pendant au moins 10 h et plus préférablement pendant au moins 15 h pour obtenir une matière première,
(vi) durcir à la vapeur la matière première obtenue à l'étape (v) dans un autoclave, si nécessaire après l'avoir coupée en morceaux, et
(vii) secher la matière première durcie à la vapeur.

2. Procédé selon la revendication 1, dans lequel le mélange aqueux de l'étape (i) comprend au moins un autre ingrédient choisi parmi le kaolin, la matière de retour, les agents pour rendre hydrophobes, d'autres adjuvants pour béton et leurs mélanges.

3. Procédé selon l'une quelconque des revendications précédentes, dans lequel le mélange aqueux de l'étape (i) comprend, sur la base de la teneur totale en solides
25-35 % en poids de SiO₂,
18-35% en poids de chaux hydratée,
25-45% en poids de ciment
éventuellement 5 à 10 % en poids, de préférence 6 à 8 % en poids de kaolin, et
3-8% en poids d'accélérateur de durcissement.

4. Procédé selon l'une quelconque des revendications précédentes, dans lequel le rapport de l'eau aux matières solides dans le mélange aqueux de l'étape (i) est d'environ 0,5 : 1 à 1,5 : 1, de préférence de 0,6 : 1 à 1 : 1.

5. Procédé selon l'une quelconque des revendications précédentes, dans lequel le mélange aqueux de l'étape (i) ne comprend pas de fibres organiques ou inorganiques.

6. Procédé selon l'une quelconque des revendications précédentes, dans lequel la température du mélange aqueux de l'étape (i) est d'environ 19-30°C, de préférence d'environ 20-25°C.

7. Procédé selon l'une quelconque des revendications précédentes, dans lequel, à l'étape (i), l'eau, le SiO₂, la chaux hydratée, le ciment, l'accélérateur de durcissement et éventuellement d'autres ingrédients sont mélangés dans un premier mélangeur vertical.

8. Procédé selon l'une quelconque des revendications précédentes, dans lequel le mélange aqueux de l'étape (i) est transféré dans un deuxième mélangeur, de préférence un mélangeur vertical, où il est mélangé avec au moins un agent moussant à l'étape (ii), de préférence dans des conditions où la formation de mousse est essentiellement évitée.

9. Procédé selon la revendication 8, dans lequel le mélange de l'étape (ii) est transféré, directement ou par l'intermédiaire de récipients de pré-alimentation, par exemple un troisième mélangeur vertical, à un mélangeur oscillant, dans lequel du gaz, de préférence de l'air, est injecté pour faire mousser le mélange.

10. Procédé selon l'une quelconque des revendications 1 à 7, dans lequel les étapes (ii) et (iii) sont réalisées ensemble dans un mélangeur oscillant.

11. Procédé selon l'une quelconque des revendications précédentes, dans lequel la densité apparente du mélange moussé à l'étape (iii) est de 40 à 120 kg/m³, de préférence de 60 à 100 kg/m³.

12. Procédé selon l'une quelconque des revendications précédentes, dans lequel, à l'étape (iv), le mélange moussé de l'étape (iii) est déchargé du mélangeur oscillant directement dans un moule et est mélangé dans le moule par des outils de mélange mobiles, de préférence déplacés à travers le moule.

13. Procédé selon l'une quelconque des revendications 1 à 11, dans lequel, à l'étape (iv), le mélange moussé de l'étape (iii) est transféré du mélangeur oscillant à un autre mélangeur, de préférence un mélangeur horizontal, y est mélangé à faible vitesse et est déchargé de celui-ci dans un moule.

14. Procédé selon l'une quelconque des revendications précédentes, dans lequel le mélange brut reste dans le moule pendant 6 à 72 h, de préférence à une température essentiellement constante, la température étant de préférence approximativement égale à la température initiale du mélange moussé.

15. Procédé selon l'une quelconque des revendications précédentes, dans lequel le moule est partiellement ou totalement retiré avant le durcissement à la vapeur.

16. Procédé selon l'une quelconque des revendications précédentes, dans lequel la matière première de l'étape (v) est divisée en portions plus petites.

17. Procédé selon l'une quelconque des revendications précédentes, dans lequel le matériau séché est traité mécaniquement après l'étape (vii).

18. Appareil pour produire un matériau de construction minéral poreux, comprenant :
a) au moins un premier mélangeur (1), de préférence un mélangeur vertical, comprenant une chambre dans laquelle sont disposés de manière mobile des outils de mélange,
b) au moins un deuxième mélangeur (3), de préférence un mélangeur vertical, comprenant une chambre avec des outils de mélange disposés de manière mobile à l'intérieur et un dispositif pour doser un agent moussant dans la chambre,
c) au moins un mélangeur oscillant (8, 9), comprenant une chambre, un dispositif d'entraînement pour générer un mouvement de rotation oscillant de la chambre autour de son axe central et au moins un agent moussant fixe disposé dans la chambre et conçu pour introduire du gaz dans la chambre,
d) au moins un autre mélangeur (10, 11), de préférence un mélangeur horizontal, comprenant des outils de mélange disposés de manière mobile, et
e) des lignes pour transférer un mélange du premier mélangeur (1) au deuxième mélangeur (3), de là au mélangeur oscillant (8, 9) et de là à l'autre mélangeur (10, 11), à chaque fois éventuellement via une ou plusieurs stations intermédiaires.

19. Appareil pour produire un matériau de construction minéral poreux, comprenant :
a) au moins un premier mélangeur (1), de préférence un mélangeur vertical, comprenant une chambre dans laquelle sont disposés de manière mobile des outils de mélange,
b) au moins un mélangeur oscillant (8, 9), comprenant une chambre, un dispositif d'entraînement pour générer une rotation oscillante de la chambre autour de son axe central, au moins un agent moussant fixe disposé dans la chambre et conçu pour introduire du gaz dans la chambre, et au moins un dispositif pour doser un agent moussant dans la chambre,
c) au moins un autre mélangeur (10, 11), de préférence un mélangeur horizontal, comprenant des outils de mélange disposés de manière mobile, et
d) des lignes pour transférer un mélange du premier mélangeur (1) au mélangeur oscillant (8, 9) et de là à l'autre mélangeur (10, 11), à chaque fois éventuellement via une ou plusieurs stations intermédiaires.

20. Dispositif selon la revendication 18, dans lequel le premier mélangeur (1) et le deuxième mélangeur (3) sont chacun des mélangeurs verticaux, et au moins un autre mélangeur vertical (5) est disposé comme récipient de réception entre le deuxième mélangeur (3) et le mélangeur oscillant (7, 8).

21. Appareil selon l'une quelconque des revendications 18 à 20, dans lequel plusieurs mélangeurs oscillants (7, 8) sont disposés en parallèle.

22. Appareil selon l'une quelconque des revendications 18 à 21, qui est adapté pour un fonctionnement continu.
